# EUROPEAN PATENT SPECIFICATION

(11) **EP 3 441 568 B1**
(45) Date of publication and mention of the grant of the patent: **29.07.2020**
(21) Application number: 18180411.3
(22) Date of filing: 28.06.2018
(51) Int. Cl.: F01D 5/18, F01D 9/04, F23R 3/00

(54) **TURBOMACHINE IMPINGEMENT COOLING INSERT**
TURBOMASCHINENPRALLKÜHLEINSATZ
INSERT DE REFROIDISSEMENT PAR IMPACT DE TURBOMACHINE

(30) Priority: 13.07.2017 US 201715648683
(43) Date of publication of application: 13.02.2019
(73) Proprietor: General Electric Company, Schenectady, NY 12345 (US)
(72) Inventor: DUTTA, Sandip, Greenville, SC South Carolina 29615 (US); HART, Kassy Moy, Greenville, SC South Carolina 29615 (US); WEBER, Joseph Antony, Greenville, SC South Carolina 29615 (US); GUNNING, Sean Patrick, Greenville, SC South Carolina 29615 (US)
(74) Representative: BRP Renaud & Partner mbB Rechtsanwälte Patentanwälte Steuerberater

(56) References cited:
- EP-A1- 2 762 252
- EP-A2- 1 452 690
- WO-A1-03/062607
- US-A1- 2005 268 613

## Description

### FIELD

The present disclosure generally relates to turbomachines. More particularly, the present disclosure relates to impingement cooling inserts for turbomachines.

### BACKGROUND

A gas turbine engine generally includes a compressor section, a combustion section, and a turbine section. The compressor section progressively increases the pressure of air entering the gas turbine engine and supplies this compressed air to the combustion section. The compressed air and a fuel (e.g., natural gas) mix within the combustion section and combust in a combustion chamber to generate high pressure and high temperature combustion gases. The combustion gases flow from the combustion section into the turbine section where they expand to produce work. For example, expansion of the combustion gases in the turbine section may rotate a rotor shaft connected to a generator for producing electricity.

The turbine section includes one or more turbine nozzles, which direct the flow of combustion gases onto one or more turbine rotor blades. The one or more turbine rotor blades, in turn, extract kinetic and/or thermal energy from the combustion gases, thereby driving the rotor shaft. In general, each turbine nozzle includes an inner side wall, an outer side wall, and one or more airfoils extending between the inner and the outer side walls. Since the one or more airfoils are in direct contact with the combustion gases, it may be necessary to cool the airfoils.

In certain configurations, cooling air is routed through one or more inner cavities defined by the airfoils. Typically, this cooling air is compressed air bled from compressor section. Bleeding air from the compressor section, however, reduces the volume of compressed air available for combustion, thereby reducing the efficiency of the gas turbine engine. WO03062607 discloses a cooled component for a thermal engine, in particular a gas turbine, with a cooling medium, in particular cooled air, flowing for impingement cooling purposes from a distribution chamber through a perforated plate, which comprises interspaced perforations and is located in front of a cooling surface of the component at a distance from the latter.

### BRIEF DESCRIPTION

Aspects and advantages of the technology will be set forth in part in the following description, or may be obvious from the description, or may be learned through practice of the technology.

In one aspect, the present disclosure is directed to an impingement insert for a turbomachine. The impingement insert includes an insert body having an inner surface, an outer surface spaced apart from the inner surface, and a thickness extending from the inner surface to the outer surface. The insert body defines a first depression extending from one of the inner surface or the outer surface into the insert body. The first depression has a diameter. The insert body further defines an impingement aperture extending from the first depression through the insert body. The impingement aperture has a length and a diameter. The thickness of the insert body is greater than the length of the impingement aperture and the diameter of the first depression is greater than the diameter of the impingement aperture.

In another aspect, the present disclosure is directed to a turbomachine including a turbomachine component and an impingement insert positioned within the turbomachine component. The impingement insert includes an insert body having an inner surface, an outer surface spaced apart from the inner surface, and a thickness extending from the inner surface to the outer surface. The insert body defines a first depression extending from one of the inner surface or the outer surface into the insert body. The first depression has a diameter. The insert body further defines an impingement aperture extending from the first depression through the insert body. The impingement aperture has a length and a diameter. The thickness of the insert body is greater than the length of the impingement aperture and the diameter of the first depression is greater than the diameter of the impingement aperture.

These and other features, aspects and advantages of the present technology will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present technology, including the best mode of practicing the various embodiments, is set forth in the specification, which makes reference to the appended figures, in which:
FIG. 1 is a schematic view of an exemplary gas turbine engine in accordance with embodiments of the present disclosure;
FIG. 2 is a cross-sectional view of an exemplary turbine section in accordance with embodiments of the present disclosure;
FIG. 3 is a perspective view of an exemplary nozzle in accordance with embodiments of the present disclosure;
FIG. 4 is a cross-sectional view of the nozzle taken generally about line 4-4 in FIG. 3 in accordance with embodiments of the present disclosure;
FIG. 5 is a perspective view of an embodiment of an impingement insert positioned within a hot gas path component in accordance with embodiments of the present disclosure;
FIG. 6 is a perspective view of an embodiment of an impingement insert in accordance with embodiments of the present disclosure;
FIG. 7 is a cross-sectional view of a portion of an impingement insert, illustrating one embodiment of an impingement aperture in accordance with embodiments of the present disclosure;
FIG. 8 is a cross-sectional view of a portion of an impingement insert, illustrating another embodiment of an impingement aperture in accordance with embodiments of the present disclosure;
FIG. 9 is a cross-sectional view of a portion of an impingement insert, illustrating a further embodiment of an impingement aperture in accordance with embodiments of the present disclosure;
FIG. 10 is a perspective view of another embodiment of an impingement insert in accordance with embodiments of the present disclosure;
FIG. 11 is a perspective view of a further embodiment of an impingement insert in accordance with embodiments of the present disclosure; and
FIG. 12 is cross-sectional view of yet another embodiment of an impingement insert in accordance with embodiments of the present disclosure.

Repeat use of reference characters in the present specification and drawings is intended to represent the same or analogous features or elements of the present technology.

### DETAILED DESCRIPTION

Reference will now be made in detail to present embodiments of the technology, one or more examples of which are illustrated in the accompanying drawings. The detailed description uses numerical and letter designations to refer to features in the drawings. Like or similar designations in the drawings and description have been used to refer to like or similar parts of the technology. As used herein, the terms "first", "second", and "third" may be used interchangeably to distinguish one component from another and are not intended to signify location or importance of the individual components. The terms "upstream" and "downstream" refer to the relative direction with respect to fluid flow in a fluid pathway. For example, "upstream" refers to the direction from which the fluid flows, and "downstream" refers to the direction to which the fluid flows.

Each example is provided by way of explanation of the technology, not limitation of the technology. In fact, it will be apparent to those skilled in the art that modifications and variations can be made in the present technology without departing from the scope of the appended claims. For instance, features illustrated or described as part of one embodiment may be used on another embodiment to yield a still further embodiment. Thus, it is intended that the present technology covers such modifications and variations as come within the scope of the appended claims.

Although an industrial or land-based gas turbine is shown and described herein, the present technology as shown and described herein is not limited to a land-based and/or industrial gas turbine unless otherwise specified in the claims. For example, the technology as described herein may be used in any type of turbomachine including, but not limited to, aviation gas turbines (e.g., turbofans, etc.), steam turbines, and marine gas turbines.

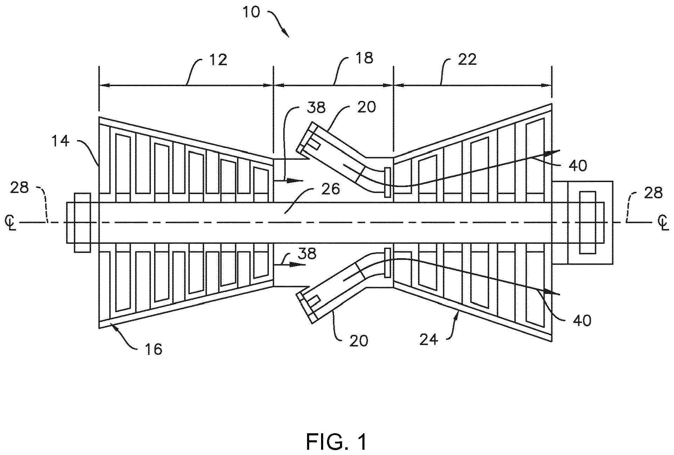

Referring now to the drawings, wherein identical numerals indicate the same elements throughout the figures, FIG. 1 schematically illustrates a gas turbine engine 10. As shown, the gas turbine engine 10 generally includes a compressor section 12 having an inlet 14 disposed at an upstream end of an axial compressor 16. The gas turbine engine 10 also includes a combustion section 18 having one or more combustors 20 positioned downstream from the compressor 16. The gas turbine engine 10 further includes a turbine section 22 having a turbine 24 (e.g., an expansion turbine) disposed downstream from the combustion section 18. A shaft 26 extends axially through the compressor 16 and the turbine 24 along an axial centerline 28 of the gas turbine engine 10.

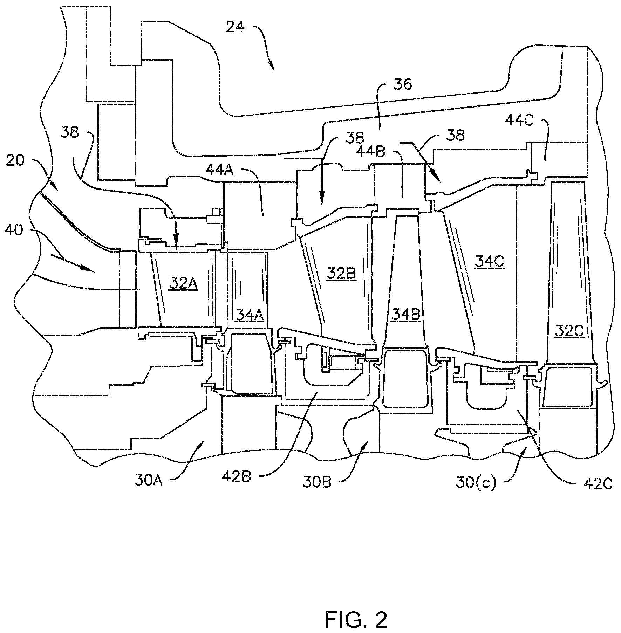

FIG. 2 is a cross-sectional side view of the turbine 24. As shown, the turbine 24 may include multiple turbine stages. For example, the turbine 24 may include a first stage 30A, a second stage 30B, and a third stage 30C. Although, the turbine 24 may include more or fewer turbine stages in alternate embodiments.

Each stage 30A-30C includes, in serial flow order, a row of turbine nozzles 32A, 32B, and 32C and a corresponding row of turbine rotor blades 34A, 34B, and 34C axially spaced apart along the rotor shaft 26 (FIG. 1). Each of the turbine nozzles 32A-32C remains stationary relative to the turbine rotor blades 34A-34C during operation of the gas turbine 10. Each of the rows of turbine nozzles 32B, 32C is respectively coupled to a corresponding diaphragm 42B, 42C. Although not shown in FIG. 2, the row of turbine nozzles 32A may also couple to a corresponding diaphragm. A first turbine shroud 44A, a second turbine shroud 44B, and a third turbine shroud 44C circumferentially enclose the corresponding row of turbine blades 34A-34C. A casing or shell 36 circumferentially surrounds each stage 30A-30C of the turbine nozzles 32A-32C and the turbine rotor blades 34A-34C.

As illustrated in FIGS. 1 and 2, the compressor 16 provides compressed air 38 to the combustors 20. The compressed air 38 mixes with a fuel (e.g., natural gas) in the combustors 20 and burns to create combustion gases 40, which flow into the turbine 24. The turbine nozzles 32A-32C and turbine rotor blades 34A-34C extract kinetic and/or thermal energy from the combustion gases 40, thereby driving the rotor shaft 26. The combustion gases 40 then exit the turbine 24 and the gas turbine engine 10. As will be discussed in greater detail below, a portion of the compressed air 38 may be used as a cooling medium for cooling the various components of the turbine 24, such as the turbine nozzles 32A-32C.

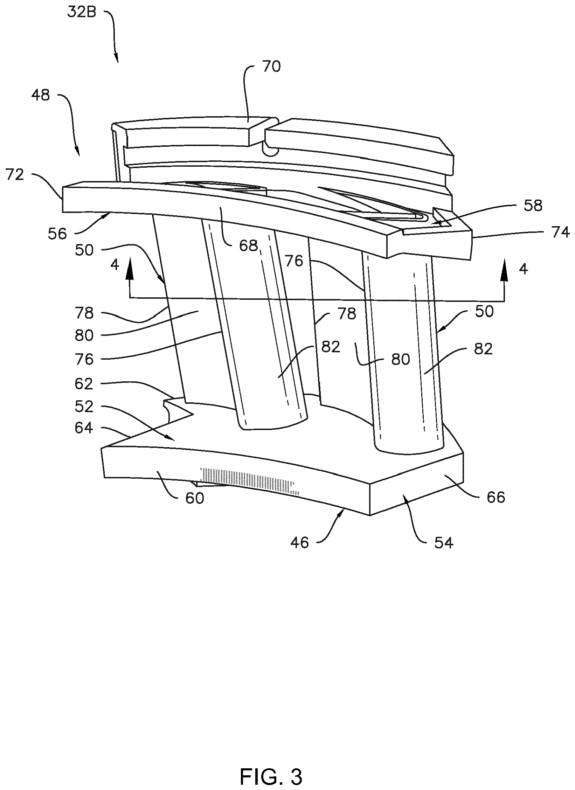

FIG. 3 is a perspective view of the turbine nozzle 32B of the second stage 30B. The other turbine nozzles 32A, 32C include features similar to those of the turbine nozzle 32B. As shown in FIG. 3, the turbine nozzle 32B includes an inner side wall 46 and an outer side wall 48 radially spaced apart from the inner side wall 46. A pair of airfoils 50 extends in span from the inner side wall 46 to the outer side wall 48. In alternate embodiments, the turbine nozzle 32B may have only one airfoil 50, three airfoils 50, or more airfoils 50.

As illustrated in FIG. 3, the inner and the outer side walls 46, 48 include various surfaces. More specifically, the inner side wall 46 includes a radially outer surface 52 and a radially inner surface 54 positioned radially inwardly from the radially outer surface 52. Similarly, the outer side wall 48 includes a radially inner surface 56 and a radially outer surface 58 oriented radially outwardly from the radially inner surface 56. As shown in FIGS. 2 and 3, the radially inner surface 56 of the outer side wall 48 and the radially outer surface 52 of the inner side wall 46 respectively define the inner and outer radial flow boundaries for the combustion gases 40 flowing through the turbine 24. The inner side wall 46 also includes a forward surface 60 and an aft surface 62 positioned downstream from the forward surface 60. The inner side wall 46 further includes a first circumferential surface 64 and a second circumferential surface 66 circumferentially spaced apart from the first circumferential surface 64. Similarly, the outer side wall 48 includes a forward surface 68 and an aft surface 70 positioned downstream from the forward surface 68. The outer side wall 48 also includes a first circumferential surface 72 and a second circumferential surface 74 spaced apart from the first circumferential surface 72.

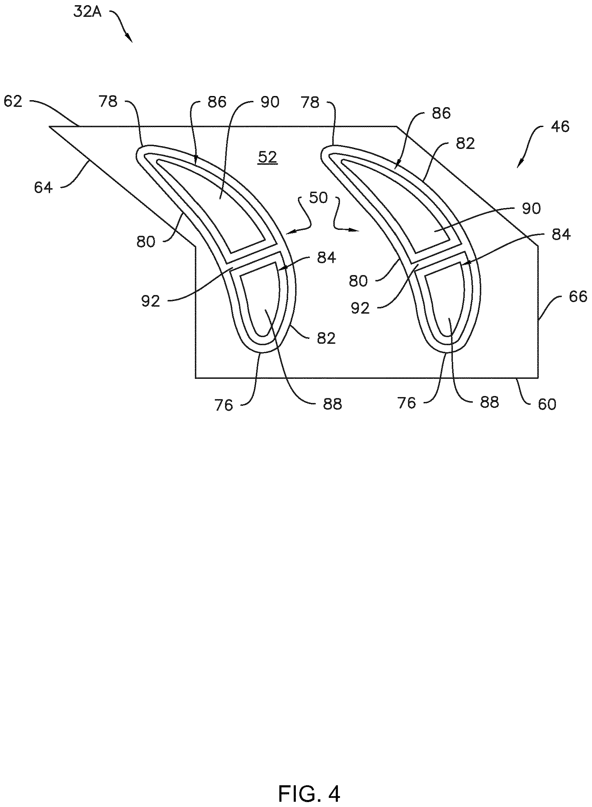

As mentioned above, two airfoils 50 extend from the inner side wall 46 to the outer side wall 48. As illustrated in FIGS. 3 and 4, each airfoil 50 includes a leading edge 76 disposed proximate to the forward surfaces 60, 68 of the inner and the outer side walls 46, 48. Each airfoil 50 also includes a trailing edge 78 disposed proximate to the aft surfaces 62, 70 of the inner and the outer side walls 46, 48. Furthermore, each airfoil 50 includes a pressure side wall 80 and an opposing suction side wall 82 extending from the leading edge 76 to the trailing edge 78.

Each airfoil 50 may define one or more inner cavities therein. An insert may be positioned in each of the inner cavities to provide the compressed air 38 (e.g., via impingement cooling) to the pressure-side and suction-side walls 80, 82 of the airfoil 50. In the embodiment illustrated in FIG. 4, each airfoil 50 defines a forward inner cavity 84 having a forward insert 88 positioned therein and an aft inner cavity 86 having an aft insert 90 positioned therein. A rib 92 may separate the forward and aft inner cavities 84, 86. Nevertheless, the airfoils 50 may define one inner cavity, three inner cavities, or four or more inner cavities in alternate embodiments. Furthermore, some of the inner cavities may not include inserts in certain embodiments as well.

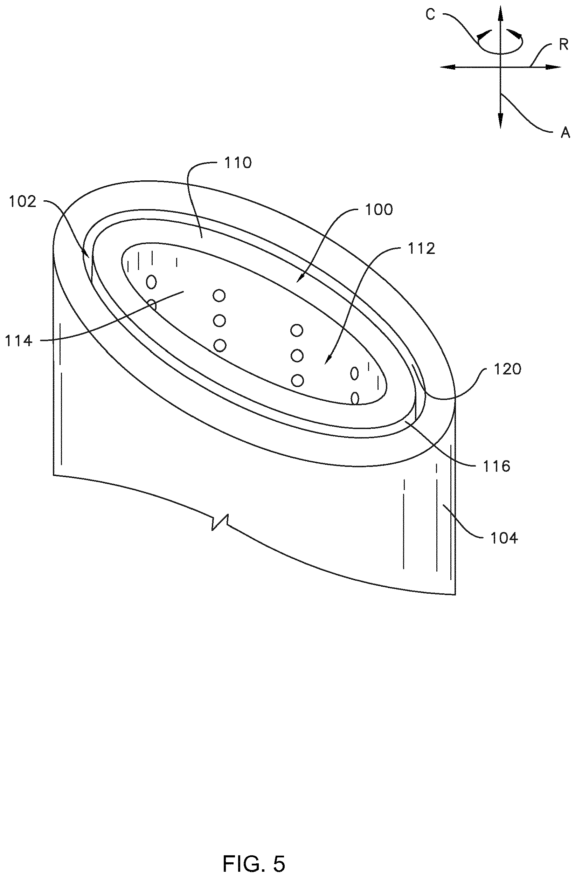

FIGS. 5-10 illustrate embodiments of an impingement insert 100, which may be positioned a hot gas path component cavity 102 defined by a hot gas path component 104. In some embodiments, for example, the impingement insert 100 may be positioned in the forward inner cavity 86 of one of the airfoils 50 in the nozzle 32B in place of the forward insert 90 shown in FIG. 4. In such embodiments, the hot gas path component cavity 102 may be the forward inner cavity 86, and hot gas path component 104 may be the nozzle 32B. In further embodiments, the hot gas path component 104 may be other nozzles, one of the turbine shrouds 44A-44C, or one of the rotor blades 32A-32C. Nevertheless, the hot gas path component 104 may be any suitable component in the gas turbine engine 10. As such, the hot gas path component cavity 102 may be any suitable cavity in the gas turbine engine 10.

The hot gas path component 104 is shown generically in FIG. 5 as having an annular cross-section. Nevertheless, the hot gas path component 104 may be a flat plate or have any suitable cross-section and/or shape.

As illustrated in FIGS. 5-10, the impingement insert 100 defines an axial direction A, a radial direction R, and a circumferential direction C. In general, the axial direction A extends between a top end 106 of the impingement insert 100 and a bottom end 108 of the impingement insert 100. Furthermore, the radial direction R extends orthogonally outward from the axial direction A, and the circumferential direction C extends concentrically around the axial direction A.

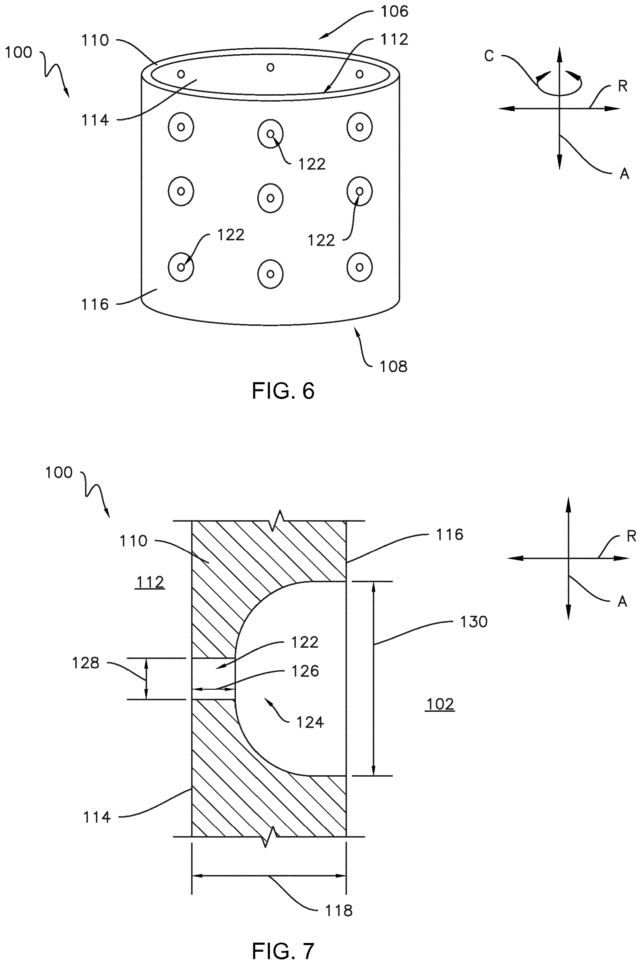

Referring particularly to FIGS. 5 and 6, the impingement insert 100 includes an insert body 110 that defines an impingement insert cavity 112 therein. In this respect, the insert body 110 includes an inner surface 114, which forms the outer boundary of the impingement insert cavity 112, and an outer surface 116 spaced apart from the inner surface 110. As such, the insert body 110 has an insert body thickness 118 (FIG. 7) extending between the inner and outer surfaces 114, 116. In the embodiment shown, the impingement insert 100 generally has an annular cross-section. Although, the impingement insert 100 may have any suitable shape or configuration (e.g., a flat plate) in other embodiments.

As mentioned above, the impingement insert 100 is positioned in the hot gas path component cavity 102 of the hot gas path component 104. More specifically, an inner surface 120 of the hot gas path component 104 forms the outer boundary of the hot gas path component cavity 102. The impingement insert 100 is positioned within the hot gas path component cavity 102 such that the outer surface 116 of the insert body 110 is spaced apart from the inner surface 120 of the hot gas path component 104. The spacing between outer surface 116 of the insert body 110 and the inner surface 120 of the hot gas path component 104 may be sized to facilitate impingement cooling of the inner surface 120 as will be discussed in greater detail below.

As illustrated in FIG. 6, the impingement insert 100 defines a plurality of impingement apertures 122. In the embodiment shown, the impingement apertures 116 have a circular cross-section. Although, the impingement apertures 122 may have any suitable cross-section (e.g., rectangular, triangular, oval, elliptical, pentagonal, hexagonal, star-shaped, etc.) in alternate embodiments. Furthermore, the impingement insert 100 may define any suitable number of impingement apertures 122.

FIG. 7 illustrates a cross-sectional view of one of the impingement apertures 122 shown in FIG. 6. As shown, the insert body 110 defines a depression 124 that extends from the outer surface 116 radially into the insert body 110. In the embodiment shown, the depression 124 is hemispherical. Although, the depression 124 may have any other suitable shape in other embodiments. The insert body 110 also defines the impingement aperture 122, which extends from the depression 124 radially through the insert body 110 to the inner surface 114. In this respect, the impingement aperture 122 and the depression 124 fluidly couple the impingement insert cavity 108 and the hot gas path component cavity 102.

The depression 124 is localized to the impingement aperture 122 in the embodiment shown in FIG. 7. When the depression 124 is localized, only one impingement aperture 122 extends from the depression 124 and through the insert body 110.

As shown in FIG. 7, the impingement aperture 122 and the depression 124 may have various dimensions. As shown, the impingement aperture 122 has a length 126 extending between the depression 124 and the inner surface 114. The impingement aperture 122 also has a diameter 128. Similarly, the depression 124 has a diameter 130. In embodiments where the impingement aperture 122 and/or the depression 124 have non-circular cross-sections, the diameters 128, 130 are the widest dimension of the impingement aperture 122 and/or the depression 124.

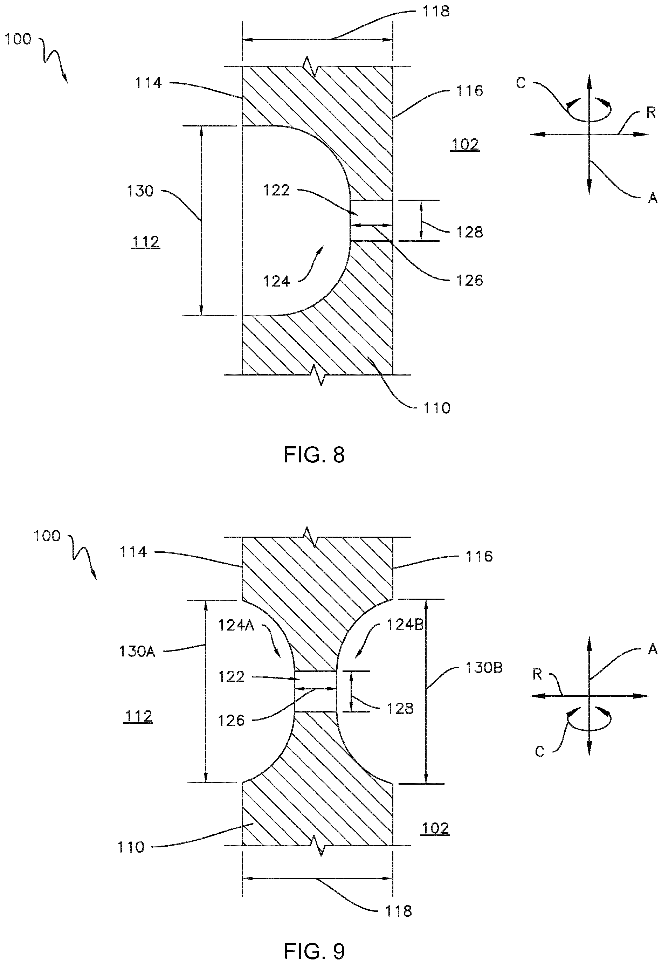

FIG. 7 illustrates one embodiment of the dimensions of the impingement aperture 122 and the depression 124. More specifically, the thickness 118 of the insert body 110 is greater than the length 126 of the impingement aperture 122. The ratio of the length 126 of the impingement aperture 122 to the diameter 128 of the impingement aperture 122 may be less than or equal to one. In this respect, the length 126 may be less than the diameter 128 as shown in FIG. 7 or equal to the diameter 128 as shown in FIG. 8. Furthermore, the diameter 130 of the depression 124 is greater than the diameter 128 of the impingement aperture 122. In some embodiments, for example, the diameter 130 of the depression 124 may be between two and four times greater than the diameter 128 of the impingement aperture 122. In one embodiment, the diameter 130 of the depression 124 may be at least three times greater than the diameter 128 of the impingement aperture 122. In alternate embodiments, however, the impingement aperture 122 and the depression 124 may have any suitable dimensions that permit the impingement aperture 122 to provide impingement cooling to the hot gas path component 104 (FIG. 5).

FIG. 8 illustrates a cross-sectional view of another embodiment of the impingement aperture 122. As shown, the insert body 110 defines the depression 124 that extends from the inner surface 114 radially into the insert body 110. The insert body 110 also defines the impingement aperture 122, which extends from the depression 124 radially through the insert body 110 to the outer surface 116.

FIG. 9 illustrates a cross-sectional view of a further embodiment of the impingement aperture 122. As shown, the insert body 110 defines a first depression 124A that extends from the inner surface 114 radially into the insert body 110 and a second depression 124B that extends from the outer surface 116 radially into the insert body 110. The first depression 124A has a diameter 130A, and the second depression 124B has a diameter 130B. In the embodiment shown, the diameters 130A, 130B of the first and second depressions 124A, 124B are the same. Although, the diameters 130A, 130B may be different in other embodiments. Furthermore, the first and second depressions 124A, 124B may have the same or different depths into the insert body 110. The insert body 110 also defines the impingement aperture 122, which extends from the first depression 124A radially through the insert body 110 to the second depression 124B.

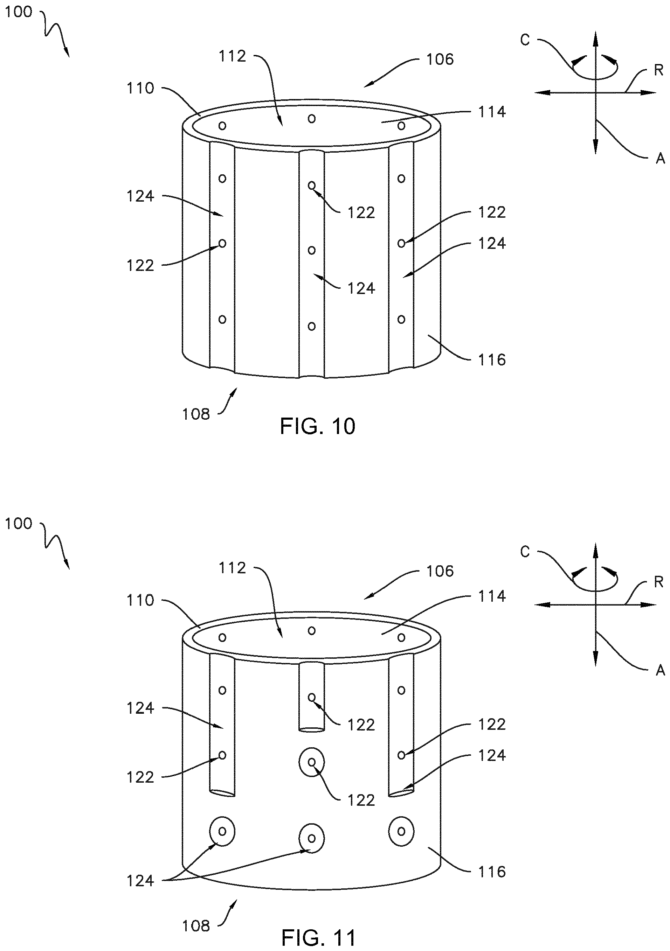

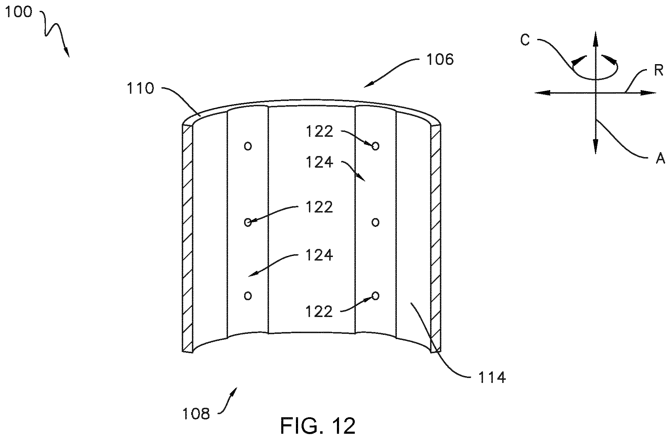

FIG. 10 illustrates another embodiment of the impingement insert 100. Like the embodiment of the impingement insert 100 shown in FIGS. 6-9, the insert body 110 of the impingement insert 100 shown in FIG. 10 defines the impingement apertures 122 and the depressions 124. However, each depression 124 in FIG. 10 is not localized to one of the impingement apertures 122. Instead, each depression 124 is a slot extending from the top end 106 of the impingement insert 100 to the bottom end 108 of the impingement insert 100 and from the outer surface 114 into the insert body 110. In this respect, multiple impingement apertures 122 extend from each depression 124 through the insert body 110. For example, in the embodiment shown, three impingement apertures 122 extend from each depression 124 through the insert body 110. Although, two, four, five, or more impingement apertures 122 may extend from each depression 124 through the insert body 110 in other embodiments. In alternate embodiments, the depressions 124 may have any shape and/or configuration. For example, the depressions 124 may extend only partially between the top and bottom ends 106, 108 of the impingement insert 100 as illustrated in FIG. 11. Furthermore, as illustrated in FIG. 12, the depressions 124 may extend from the inner surface 114 into the insert body 110.

In some embodiments, the impingement insert 100 is formed via additive manufacturing. The term "additive manufacturing" as used herein refers to any process which results in a useful, three-dimensional object and includes a step of sequentially forming the shape of the object one layer at a time. Additive manufacturing processes include three-dimensional printing (3DP) processes, laser-net-shape manufacturing, direct metal laser sintering (DMLS), direct metal laser melting (DMLM), plasma transferred arc, freeform fabrication, etc. A particular type of additive manufacturing process uses an energy beam, for example, an electron beam or electromagnetic radiation such as a laser beam, to sinter or melt a powder material. Additive manufacturing processes typically employ metal powder materials or wire as a raw material. Nevertheless, the impingement insert 100 may be constructed using any suitable manufacturing process.

In operation, the impingement insert 100 provides impingement cooling to the hot gas path component 104. More specifically, cooling air, such as compressed air 38 bled from the compressor section 12, is directed into the impingement insert cavity 112. The cooling air in the impingement insert cavity 112 then flows through the impingement apertures 122 and the corresponding depressions 124 and across the hot gas path component cavity 102 until striking the inner surface 120 of the hot gas path component 104.

The depressions 124 improve the impingement cooling effectiveness. More specifically, impingement cooling effectiveness increases as the thickness 118 of insert body 110 decreases. Nevertheless, the impingement insert 100 may become weak and unable to withstand handling and/or the operating environment if the thickness 118 of insert body 110 becomes too thin. In this respect, the depressions 124 decrease the thickness of the insert body 110 proximate to the impingement apertures 122 to improve impingement cooling, while still maintaining a thick enough insert body 110 elsewhere to withstand handling and/or the operating environment.

As discussed above, the depressions 124 provide improved impingement cooling performance while maintaining sufficient strength. In this respect, the impingement insert 100 provides greater impingement cooling to the inner surface 120 of the hot gas path component 104 than conventional impingement inserts. As such, the impingement insert 100 diverts less compressed air 38 from the compressor section 12 (FIG. 1) than conventional inserts, thereby increasing the efficiency of the gas turbine engine 10.

This written description uses examples to disclose the technology, and also to enable any person skilled in the art to practice the technology, including making and using any devices or systems and performing any incorporated methods. The patentable scope of the technology is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. An impingement insert (100) for a turbomachine (10), comprising:
an insert body (110) including an inner surface (114), an outer surface (116) spaced apart from the inner surface (114), and a thickness (118) extending from the inner surface (114) to the outer surface (116), the insert body (110) defining a first depression (124, 124A, 124B) extending from one of the inner surface (114) or the outer surface (116) into the insert body (110), the first depression (124, 124A, 124B) having a diameter (130, 130A, 130B), the insert body (110) further defining an impingement aperture (122) extending from the first depression (124, 124A, 124B) through the insert body (110), the impingement aperture (122) having a length (126) and a diameter (128),
wherein the thickness (118) of the insert body (110) is greater than the length (126) of the impingement aperture (122) and the diameter (130, 130A, 130B) of the first depression (124, 124A, 124B) is greater than the diameter (128) of the impingement aperture (122).

2. The impingement insert (100) of claim 1, wherein the length (126) of the impingement aperture (122) is less than or equal to the diameter (128) of the impingement aperture (122).

3. The impingement insert (100) of claim 1 or 2, wherein the diameter (130, 130A, 130B) of the first depression (124, 124A, 124B) is between two times and four times greater than the diameter (128) of the impingement aperture (122).

4. The impingement insert (100) of claim 1, 2 or 3 wherein the diameter (130, 130A, 130B) of the first depression (124, 124A, 124B) is at least three times greater than the diameter (128) of the impingement aperture (122).

5. The impingement insert (100) of any preceding claim, wherein the first depression (124, 124A, 124B) extends from the inner surface (114) into the insert body (110), the impingement aperture (122) extending from the first depression (124, 124A, 124B) to the outer surface (116).

6. The impingement insert (100) of any of claims 1 to 4, wherein the first depression (124, 124A, 124B) extends from the outer surface (116) into the insert body (110), the impingement aperture (122) extending from the first depression (124, 124A, 124B) to the inner surface (114).

7. The impingement insert (100) of any preceding claim, wherein the insert body (110) defines a second depression (124, 124A, 124B) extending from the other of the inner surface (114) or the outer surface (116) into the insert body (110), the impingement aperture (122) extending from the first depression (124, 124A, 124B) to the second depression (124, 124A, 124B).

8. The impingement insert (100) of claim 7, wherein the second depression (124, 124A, 124B) has a diameter (130, 130A, 130B), the diameter (130, 130A, 130B) of the first depression (124, 124A, 124B) being the same as the diameter (130, 130A, 130B) of the second depression (124, 124A, 124B).

9. The impingement insert (100) of any preceding claim, wherein the first depression (124, 124A, 124B) is a slot extending from a first end (106, 108) of the insert body (110) to a second end (106, 108) of the insert body (110) spaced apart from the first end (106, 108).

10. The impingement insert (100) of any preceding claim, wherein the first depression (124, 124A, 124B) is localized to the impingement aperture (122).

11. A turbomachine (10), comprising:
a turbomachine component (32A, 32B, 32C, 34A, 34B, 34C); and
the impingement insert (100) of any one of Claims 1 to 5 positioned within the turbomachine component (32A, 32B, 32C, 34A, 34B, 34C).

## Patentansprüche

1. Pralleinsatz (100) für eine Turbomaschine (10), umfassend:
einen Einsatzkörper (110) einschließlich einer Innenoberfläche (114), einer Außenoberfläche (116), die von der Innenoberfläche (114) beabstandet ist, und einer Dicke (118), die sich von der Innenoberfläche (114) zur Außenoberfläche (116) erstreckt, wobei der Einsatzkörper (110) eine erste Vertiefung (124, 124A, 124B) definiert, die sich von der Innenoberfläche (114) oder der Außenoberfläche (116) in den Einsatzkörper (110) erstreckt, wobei die erste Vertiefung (124, 124A, 124B) einen Durchmesser (130, 130A, 130B) aufweist, wobei der Einsatzkörper (110) ferner eine Prallöffnung (122) definiert, die sich von der ersten Vertiefung (124, 124A, 124B) durch den Einsatzkörper (110) erstreckt, wobei die Prallöffnung (122) eine Länge (126) und einen Durchmesser (128) aufweist,
wobei die Dicke (118) des Einsatzkörpers (110) größer ist als die Länge (126) der Prallöffnung (122) und der Durchmesser (130, 130A, 130B) der ersten Vertiefung (124, 124A, 124B) größer ist als der Durchmesser (128) der Prallöffnung (122).

2. Pralleinsatz (100) nach Anspruch 1, wobei die Länge (126) der Prallöffnung (122) kleiner als der oder gleich dem Durchmesser (128) der Prallöffnung (122) ist.

3. Pralleinsatz (100) nach Anspruch 1 oder 2, wobei der Durchmesser (130, 130A, 130B) der ersten Vertiefung (124, 124A, 124B) zwischen dem Zweifachen und Vierfachen des Durchmessers (128) der Prallöffnung (122) beträgt.

4. Pralleinsatz (100) nach Anspruch 1, 2 oder 3, wobei der Durchmesser (130, 130A, 130B) der ersten Vertiefung (124, 124A, 124B) mindestens dreimal so groß ist wie der Durchmesser (128) der Prallöffnung (122).

5. Pralleinsatz (100) nach einem der vorstehenden Ansprüche, wobei sich die erste Vertiefung (124, 124A, 124B) von der Innenoberfläche (114) in den Einsatzkörper (110) erstreckt, wobei sich die Prallöffnung (122) von der ersten Vertiefung (124, 124A, 124B) zu der Außenoberfläche (116) erstreckt.

6. Pralleinsatz (100) nach einem der Ansprüche 1 bis 4, wobei sich die erste Vertiefung (124, 124A, 124B) von der Außenoberfläche (116) in den Einsatzkörper (110) erstreckt, wobei sich die Prallöffnung (122) von der ersten Vertiefung (124, 124A, 124B) zu der Innenoberfläche (114) erstreckt.

7. Pralleinsatz (100) nach einem der vorstehenden Ansprüche, wobei der Einsatzkörper (110) eine zweite Vertiefung (124, 124A, 124B) definiert, die sich von der anderen von der Innenoberfläche (114) oder der Außenoberfläche (116) in den Einsatzkörper (110) erstreckt, wobei sich die Prallöffnung (122) von der ersten Vertiefung (124, 124A, 124B) zur zweiten Vertiefung (124, 124A, 124B) erstreckt.

8. Pralleinsatz (100) nach Anspruch 7, wobei die zweite Vertiefung (124, 124A, 124B) einen Durchmesser (130, 130A, 130B) aufweist, wobei der Durchmesser (130, 130A, 130B) der ersten Vertiefung (124, 124A, 124B) gleich dem Durchmesser (130, 130A, 130B) der zweiten Vertiefung (124, 124A, 124B) ist.

9. Pralleinsatz (100) nach einem der vorstehenden Ansprüche, wobei die erste Vertiefung (124, 124A, 124B) ein Schlitz ist, der sich von einem ersten Ende (106, 108) des Einsatzkörpers (110) zu einem zweiten Ende (106, 108) des Einsatzkörpers (110) erstreckt, das von dem ersten Ende (106, 108) beabstandet ist.

10. Pralleinsatz (100) nach einem der vorstehenden Ansprüche, wobei die erste Vertiefung (124, 124A, 124B) örtlich auf die Prallöffnung (122) beschränkt ist.

11. Turbomaschine (10), umfassend:
eine Turbomaschinenkomponente (32A, 32B, 32C, 34A, 34B, 34C); und
den Pralleinsatz (100) nach einem der Ansprüche 1 bis 5, der innerhalb der Turbomaschinenkomponente (32A, 32B, 32C, 34A, 34B, 34C) positioniert ist.

## Revendications

1. Insert de refroidissement (100) pour une turbomachine (10) comprenant :
un corps d'insert (110) incluant une surface interne (114), une surface externe (116) espacée de la surface interne (114), et une épaisseur (118) s'étendant à partir de la surface interne (114) vers la surface externe (116), le corps d'insert (110) définissant un premier renfoncement (124, 124A, 124B) s'étendant à partir de l'une de la surface interne (114) ou de la surface externe (116) dans le corps d'insert (110), le premier renfoncement (124, 124A, 124B) ayant un diamètre (130, 130A, 130B), le corps d'insert (110) définissant en outre une ouverture de refroidissement (122) s'étendant depuis le premier renfoncement (124, 124A, 124B) à travers le corps d'insert (110), l'ouverture de refroidissement (122) ayant une longueur (126) et un diamètre (128),
dans lequel l'épaisseur (118) du corps d'insert (110) est supérieure à la longueur (126) de l'ouverture de refroidissement (122) et le diamètre (130, 130A, 130B) du premier renfoncement (124, 124A, 124B) est supérieur au diamètre (128) de l'ouverture de refroidissement (122).

2. Insert de refroidissement (100) selon la revendication 1, dans lequel la longueur (126) de l'ouverture de refroidissement (122) est inférieure au ou égale au diamètre (128) de l'ouverture de refroidissement (122).

3. Insert de refroidissement (100) selon la revendication 1 ou 2, dans lequel le diamètre (130, 130A, 130B) du premier renfoncement (124, 124A, 124B) est entre deux fois et quatre fois supérieur au diamètre (128) de l'ouverture de refroidissement (122).

4. Insert de refroidissement (100) selon la revendication 1, 2 ou 3, dans lequel le diamètre (130, 130A, 130B) du premier renfoncement (124, 124A, 124B) est au moins trois fois supérieur au diamètre (128) de l'ouverture de refroidissement (122).

5. Insert de refroidissement (100) selon une quelconque revendication précédente, dans lequel le premier renfoncement (124, 124A, 124B) s'étend depuis la surface interne (114) dans le corps d'insert (110), l'ouverture de refroidissement (122) s'étendant depuis le premier renfoncement (124, 124A, 124B) jusqu'à la surface externe (116).

6. Insert de refroidissement (100) selon l'une quelconque des revendications 1 à 4, dans lequel le premier renfoncement (124, 124A, 124B) s'étend depuis la surface externe (116) dans le corps d'insert (110), l'ouverture de refroidissement (122) s'étendant depuis le premier renfoncement (124, 124A, 124B) jusqu'à la surface interne (114).

7. Insert de refroidissement (100) selon une quelconque revendication précédente, dans lequel le corps d'insert (110) définit un second renfoncement (124, 124A, 124B) s'étendant depuis l'autre de la surface interne (114) ou de la surface externe (116) dans le corps d'insert (110), l'ouverture de refroidissement (122) s'étendant depuis le premier renfoncement (124, 124A, 124B) jusqu'au second renfoncement (124, 124A, 124B).

8. Insert de refroidissement (100) selon la revendication 7, dans lequel le second renfoncement (124, 124A, 124B) a un diamètre (130, 130A, 130B), le diamètre (130, 130A, 130B) du premier renfoncement (124, 124A, 124B) étant le même que le diamètre (130, 130A, 130B) du second renfoncement (124, 124A, 124B).

9. Insert de refroidissement (100) selon une quelconque revendication précédente, dans lequel le premier renfoncement (124, 124A, 124B) est une fente s'étendant depuis une première extrémité (106, 108) du corps d'insert (110) vers une seconde extrémité (106, 108) du corps d'insert (110) espacée de la première extrémité (106, 108).

10. Insert de refroidissement (100) selon une quelconque revendication précédente, dans lequel le premier renfoncement (124, 124A, 124B) est localisé au niveau de l'ouverture de refroidissement (122).

11. Turbomachine (10), comprenant :
un composant de turbomachine (32A, 32B, 32C, 34A, 34B, 34C) ; et
l'insert de refroidissement (100) selon l'une quelconque des revendications 1 à 5 positionné à l'intérieur du composant de turbomachine (32A, 32B, 32C, 34A, 34B, 34C).
